# EUROPEAN PATENT APPLICATION

(11) **EP 4 755 676 A1**
(43) Date of publication of application: **10.06.2026**
(21) Application number: 24867523.3
(22) Date of filing: 20.09.2024
(51) Int. Cl.: B60J 1/00, B60J 1/08, B60J 1/20, B60J 5/04, B60Q 1/26, B60Q 1/32, B60Q 1/50

(54) **VEHICLE WINDOW ASSEMBLY, VEHICLE DOOR, AND VEHICLE**

(30) Priority: 22.09.2023 CN 202311232698
(71) Applicant: Fuyao Glass Industry Group Co., Ltd., Fuqing, Fujian 350300 (CN)
(72) Inventor: CHEN, Ronglin, Fuzhou, Fujian 350300 (CN); LI, Yuzhou, Fuzhou, Fujian 350300 (CN); CHEN, Huaqin, Fuzhou, Fujian 350300 (CN); JIANG, Lixing, Fuzhou, Fujian 350300 (CN)
(74) Representative: Mewburn Ellis LLP
(86) International application number: PCT/CN2024/119883
(87) International publication number: WO 2025/061118

(57) **Abstract**

A vehicle window assembly, a vehicle door, and a vehicle are provided. The vehicle window assembly (120b) includes a vehicle window glass (40), a vehicle window encapsulation (50), a cover plate (60), and a prompting member (70). The vehicle window encapsulation covers a peripheral side of the vehicle window glass. The cover plate is mounted to the vehicle window encapsulation. The cover plate is provided with a prompting window (63) penetrating through the cover plate in a thickness direction of cover plate. The prompting member is mounted to the prompting window, and the prompting member has a prompting surface (73) exposed relative to the cover plate and facing an outer side of the vehicle window assembly. The vehicle window assembly, the vehicle door, and the vehicle may avoid safety accidents caused by suddenly opening the vehicle door, ensuring personnel safety while reducing damage to the vehicle.

## Description

This application claims priority to Chinese Patent Application No. 202311232698.5, filed September 22, 2023, and entitled "VEHICLE WINDOW ASSEMBLY, VEHICLE DOOR, AND VEHICLE", the entire disclosure of which is incorporated herein by reference.

### TECHNICAL FIELD

The disclosure relates to the field of vehicle technology, and in particular, to a vehicle window assembly, a vehicle door, and a vehicle.

### BACKGROUND

With the development of the automotive manufacturing industry, consumers' requirements for safety and intelligence of vehicles are continuously increasing while they pursue excellent performance of vehicles. However, in existing vehicles, drivers and passengers are unable to perceive the immediate situation of vehicles and pedestrians at the rear before opening the vehicle door, and vehicles or pedestrians at the rear, being unable to judge in advance the opening and closing status of the vehicle door ahead, may collide with the vehicle door, causing safety accidents. Therefore, a significant safety hazard is presented.

### SUMMARY

Embodiments of the disclosure provide a vehicle window assembly, a vehicle door, and a vehicle, which may avoid safety accidents caused by suddenly opening the vehicle door, ensuring personnel safety while reducing damage to the vehicle.

In a first aspect, the disclosure provides a vehicle window assembly for a vehicle. The vehicle includes a vehicle body, a counter piece, and a vehicle door. Both the counter piece and the vehicle door are mounted to the vehicle body. The vehicle door is operable to be opened or closed relative to the vehicle body. The vehicle door includes a vehicle door body and the vehicle window assembly mounted to the vehicle door body. The vehicle window assembly includes a vehicle window glass, a vehicle window encapsulation, a cover plate, and a prompting member. The vehicle window encapsulation covers a peripheral side of the vehicle window glass. The cover plate is mounted to the vehicle window encapsulation. The cover plate is provided with a prompting window penetrating through the cover plate in a thickness direction of cover plate. The prompting member is mounted to the prompting window, and the prompting member has a prompting surface exposed relative to the cover plate and facing an outer side of the vehicle window assembly.

The vehicle window encapsulation includes a first encapsulation body and a first lip. The first lip is fixedly connected to the first encapsulation body and abuts against a bottom end surface of the cover plate. The counter piece includes a quarter window glass and a quarter window encapsulation. The quarter window encapsulation covers a peripheral side of the quarter window glass, and includes a second encapsulation body and a second lip fixedly connected to the second encapsulation body. When the vehicle door is closed relative to the vehicle body, the second lip is located on a side of the first lip facing away from the cover plate and abuts against the first lip.

The cover plate has a side surface facing the counter piece, and the prompting surface is exposed relative to the side surface. When the vehicle door is closed relative to the vehicle body, at least a portion of the prompting surface is exposed relative to the counter piece.

The cover plate and the vehicle window encapsulation cooperatively define a mounting cavity. The mounting cavity is in communication with the prompting window. The prompting member includes a light-emitting portion and a light-transmitting portion. The light-emitting portion is mounted in the mounting cavity. The light-transmitting portion is mounted to the prompting window. The light-transmitting portion has a light incident surface and a light-exiting surface. The light incident surface is disposed opposite to a light-emitting surface of the light-emitting portion, and the light-exiting surface is the prompting surface.

The vehicle window assembly further includes a fixing member located in the mounting cavity and mounted to the cover plate. The fixing member is disposed opposite to the light-transmitting portion, and the light-emitting portion is mounted on a surface of the fixing member facing the light-transmitting portion.

The vehicle window assembly further includes an insert and a fixing member. The insert covers an edge of the vehicle window glass facing the prompting window. The vehicle window encapsulation further covers a peripheral surface of the insert. The fixing member is located in the mounting cavity and mounted to the insert. The fixing member is disposed opposite to the light-transmitting portion, and the light-emitting portion is mounted on a surface of the fixing member facing the light-transmitting portion.

The vehicle window assembly has a first state and a second state. When the vehicle window assembly is in the first state, the light-emitting portion is in a power-off state, and the light-transmitting portion is in an opaque state. When the vehicle window assembly is in the second state, the light-emitting portion is electrified and emits light, and light from the light-emitting portion enters the light-transmitting portion through the light incident surface and exits through the light-exiting surface.

The light-transmitting portion is made of a thermoplastic plastic formed by a mixture of polycarbonate (PC) and acrylonitrile-butadiene-styrene (ABS) copolymer, or the light-transmitting portion is made of polymethyl methacrylate (PMMA), or the light-transmitting portion is made of a mixture of PMMA and acrylonitrile.

The cover plate includes a main body and a coating. The main body is mounted to the vehicle window encapsulation. The coating is provided on an outer surface of the main body. The prompting window penetrates through both the main body and the coating, and the light-transmitting portion is integrally formed with the main body.

The prompting member is implemented as a camera, wherein the camera is mounted to the prompting window, and an imaging surface of the camera serves as the prompting surface.

The cover plate is made of a thermoplastic plastic formed by a mixture of PC and ABS copolymer, or the cover plate is made of PMMA, or the cover plate is made of a mixture of PMMA and acrylonitrile.

In a second aspect, the disclosure further provides a vehicle door. The vehicle door includes a vehicle door body and the vehicle window assembly mentioned above. The vehicle window assembly is mounted to the vehicle door body.

In a third aspect, the disclosure further provides a vehicle. The vehicle includes a vehicle body, a counter piece, and the vehicle door mentioned above. The counter piece and the vehicle door are both mounted to the vehicle body, and the vehicle door is operable to be opened or closed relative to the vehicle body.

The vehicle window encapsulation includes the first encapsulation body and the first lip. The first lip is fixedly connected to the first encapsulation body and abuts against the bottom end surface of the cover plate. The counter piece includes the quarter window glass and the quarter window encapsulation. The quarter window encapsulation covers the peripheral side of the quarter window glass, and includes the second encapsulation body and the second lip fixedly connected to the second encapsulation body. When the vehicle door is closed relative to the vehicle body, the second lip is located on the side of the first lip facing away from the cover plate and abuts against the first lip.

When the vehicle door is closed relative to the vehicle body, at least a portion of the prompting surface is exposed relative to the counter piece.

In the vehicle body assembly provided in the disclosure, the prompting member is provided in the vehicle window assembly, and light emitted by the prompting member is made to exit the vehicle window assembly through the prompting surface. Therefore, pedestrians and other vehicles at the rear of the vehicle may be warned, thereby enabling pedestrians and other vehicles at the rear of the vehicle to judge the opening and closing status of the vehicle door in advance, so that they can steer clear of the vehicle, thus avoiding safety accidents caused by suddenly opening the vehicle door. In this way, personnel safety is ensured, and damage to the vehicle is reduced.

### BRIEF DESCRIPTION OF THE DRAWINGS

In order to illustrate the technical solution of embodiments of the disclosure more clearly, the accompanying drawings used in embodiments of the disclosure will be described in the following.

In order to illustrate the technical solution of embodiments of the disclosure more clearly, the accompanying drawings used in embodiments of the disclosure will be described in the following.
FIG. 1 is a schematic view of a partial structure of a vehicle provided in embodiments of the disclosure.
FIG. 2 is a schematic view of a partial structure of the vehicle as illustrated in FIG. 1 according to a first embodiment, taken along line A-A.
FIG. 3 is an enlarged schematic view of section A in FIG. 2.
FIG. 4 is a schematic view of a partial structure of the vehicle as illustrated in FIG. 1 according to a second embodiment, taken along line A-A.
FIG. 5 is an enlarged schematic view of section B in FIG. 4.
FIG. 6 is a schematic view of a partial structure of the vehicle as illustrated in FIG. 1 according to a third embodiment, taken along line A-A.
FIG. 7 is an enlarged schematic view of section C in FIG. 6.

Corresponding names for each reference sign in the drawings: vehicle 100, vehicle body 110, vehicle door 120, counter piece 130, quarter window glass 10, quarter window encapsulation 20, second encapsulation body 21, second lip 22, vehicle door body 120a, vehicle window assembly 120b, fixing member 30, vehicle window glass 40, vehicle window encapsulation 50, cover plate 60, prompting member 70, first encapsulation body 51, first lip 52, mounting cavity 121, prompting window 63, main body 61, side surface 62, prompting surface 73, light-emitting portion 71, light-transmitting portion 72, light incident surface 721, light-exiting surface 722, insert 80, camera 70a.

### DETAILED DESCRIPTION

The following will clearly and comprehensively illustrate technical solutions of embodiments of the disclosure with reference to the accompanying drawings of embodiments of the disclosure.

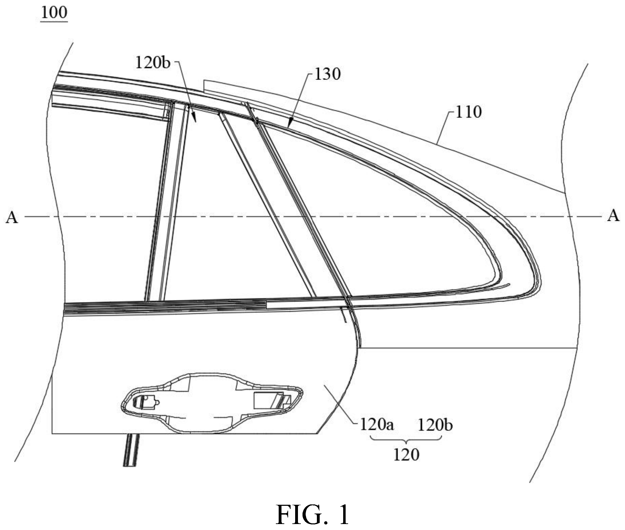

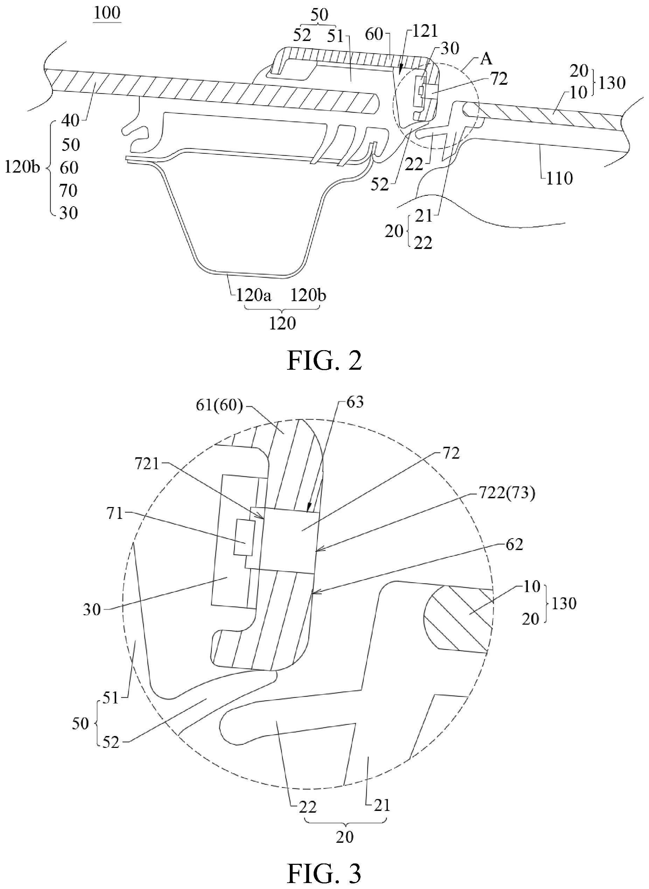

Reference is made to FIG. 1 and FIG. 2 together. FIG. 1 is a schematic view of a partial structure of a vehicle 100 provided in embodiments of the disclosure. FIG. 2 is a schematic view of a partial structure of the vehicle 100 as illustrated in FIG. 1 according to a first embodiment, taken along line A-A. The phrase "taken along line A-A" refers to sectioning along a plane where the line A-A is located, and similar illustrations hereinafter may be understood in the same way.

The vehicle 100 provided in embodiments of the disclosure may be, but is not limited to, a sedan, a truck, a pickup truck, a commercial vehicle, a bus, or an off-road vehicle, which is not limited in the disclosure. The vehicle 100 includes a vehicle body 110, a vehicle door 120, and a counter piece 130. Both the vehicle door 120 and the counter piece 130 are mounted to the vehicle body 110. The vehicle door 120 may be opened and closed relative to the vehicle body 110 and the counter piece 130. Exemplarily, the vehicle door 120 is a rear door of the vehicle 100. In other embodiments, the vehicle door 120 may be a front door of the vehicle 100.

In the embodiment, the counter piece 130 may be a quarter window of the vehicle 100. The counter piece 130 includes a quarter window glass 10 and a quarter window encapsulation 20. The quarter window encapsulation 20 covers a peripheral side of the quarter window glass 10. The quarter window encapsulation 20 elastically abuts between the quarter window glass 10 and the vehicle body 110, so as to reduce assembly tolerances between the quarter window glass 10 and the vehicle body 110, achieving sealing between the quarter window glass 10 and the vehicle body 110. Exemplarily, the quarter window encapsulation 20 may be made of polyvinyl chloride (PVC). In other embodiments, the quarter window encapsulation 20 may be made of thermoplastic elastomer (TPE) or polyurethane (PU), which is not strictly limited in embodiments of the disclosure.

In the embodiment, the quarter window encapsulation 20 includes a second encapsulation body 21 and a second lip 22. The second lip 22 is fixedly connected to the second encapsulation body 21. The second lip 22 may be used to cover the vehicle body 110, thereby preventing the interior of the vehicle 100 from being exposed through the vehicle body 110, and thus avoiding compromising the aesthetic appeal of the vehicle 100.

Reference is made to FIG. 2 and FIG. 3 together. FIG. 3 is an enlarged schematic view of section A in FIG. 2.

The vehicle door 120 includes a vehicle door body 120a and a vehicle window assembly 120b. The vehicle window assembly 120b is mounted to the vehicle door body 120a. In the embodiment, the vehicle window assembly 120b includes a fixing member 30, a vehicle window glass 40, a vehicle window encapsulation 50, a cover plate 60, and a prompting member 70. The vehicle window encapsulation 50 covers a peripheral side of the vehicle window glass 40. The cover plate 60 is mounted to the vehicle window encapsulation 50 and cooperates with the vehicle window encapsulation 50 to define a mounting cavity 121. Exemplarily, the cover plate 60 may be fixed to the vehicle window encapsulation 50 by means of adhesive tape bonding. Both the fixing member 30 and the prompting member 70 are located in the mounting cavity 121 and are mounted to the cover plate 60. Light emitted by the prompting member 70 may exit the vehicle window assembly 120b, enabling the vehicle window assembly 120b to achieve a warning function.

In the embodiment, the vehicle window encapsulation 50 elastically abuts between the vehicle window glass 40 and the vehicle door body 120a, so as to reduce assembly tolerances between the vehicle window glass 40 and the vehicle door body 120a, achieving sealing between the vehicle window glass 40 and the vehicle door body 120a. Exemplarily, the vehicle window encapsulation 50 may be made of PVC. In other embodiments, the vehicle window encapsulation 50 may be made of TPE or PU, which is not strictly limited in embodiments of the disclosure.

In the embodiment, the vehicle window encapsulation 50 includes a first encapsulation body 51 and a first lip 52. The first lip 52 is fixedly connected to the first encapsulation body 51 and abuts against a bottom end surface of the cover plate 60. When the vehicle door 120 is opened or closed relative to the vehicle body 110, the second lip 22 of the quarter window encapsulation 20 is located on a side of the first lip 52 facing away from the cover plate 60. At this point, the first lip 52 may abut against the second lip 22.

It may be understood that, since the first lip 52 may directly abut against the second lip 22, friction between the cover plate 60 and the quarter window encapsulation 20 may be avoided when the vehicle door 120 is closed relative to the vehicle body 110 and the counter piece 130, and thus preventing the cover plate 60 from being damaged, thereby helping to extend the service life of the cover plate 60. Moreover, it can also prevent drivers and passengers from being scratched by the cover plate 60 when opening or closing the vehicle door 120. Furthermore, by making the first lip 52 abut against the bottom end surface of the cover plate 60, the vehicle door 120 may be sealed, and light emitted by the prompting member 70 may be prevented from leaking through the gap between the cover plate 60 and the vehicle window encapsulation 50, thus serving an anti-light-leakage function.

In the embodiment, the cover plate 60 may be made of a thermoplastic plastic formed by a mixture of polycarbonate (PC) and acrylonitrile-butadiene-styrene (ABS) copolymer. In other embodiments, the cover plate 60 may be made of high-gloss materials such as polymethyl methacrylate (PMMA) or a mixture of PMMA and acrylonitrile (ASA). The high-gloss materials refer to materials that can achieve high-gloss mirror polishing. In the embodiment, the cover plate 60 may be served as an A-pillar cover plate, a B-pillar cover plate, or a C-pillar cover plate of the vehicle 100. Illustration of embodiments of the disclosure is provided by using an example in which the cover plate 60 serves as a C-pillar cover plate.

In the embodiment, the cover plate 60 is mounted to the vehicle window encapsulation 50. The cover plate 60 and the vehicle window encapsulation 50 cooperatively define the mounting cavity 121. Exemplarily, the cover plate 60 may be fixed to the vehicle window encapsulation 50 by means of adhesive tape bonding. The cover plate 60 is provided with a prompting window 63. The prompting window 63 penetrates through the cover plate 60 in a thickness direction of the cover plate 60. The prompting window 63 is in communication with the mounting cavity 121.

The cover plate 60 further includes a main body 61 and a coating (not shown in the drawings). The coating is provided on an outer surface of the main body 61. Specifically, the prompting window 63 penetrates through both the main body 61 and the coating in the thickness direction of the cover plate 60. Exemplarily, the coating may be provided on the outer surface of the main body 61 by means of spray painting, so that a high-gloss effect or a matte black effect of the cover plate 60 is achieved, thereby serving to block light emitted from the inner side of the cover plate 60. It may be noted that, different coating materials may be selected according to actual production requirements to achieve the high-gloss effect or matte black effect of the cover plate 60. Furthermore, the cover plate 60 has a side surface 62. Specifically, the main body 61 has the side surface 62. The side surface 62 faces the counter piece 130.

The prompting member 70 is mounted to the prompting window 63 of the cover plate 60. Exemplarily, the prompting member 70 may be fixed to a side wall of the prompting window 63 of the cover plate 60 by means of adhesive tape bonding. In other embodiments, the prompting member 70 may be fixed to the cover plate 60 by means of snap-fitting or screw fastening.

In the embodiment, the prompting member 70 has a prompting surface 73. The prompting surface 73 is exposed relative to the cover plate 60 and faces an outer side of the vehicle window assembly 120b. When the vehicle door 120 is closed relative to the vehicle body 110, at least a portion of the prompting surface 73 is exposed relative to the counter piece 130. The prompting member 70 further includes a light-emitting portion 71 and a light-transmitting portion 72. Specifically, the light-transmitting portion 72 is mounted to the prompting window 63 of the cover plate 60 and is disposed opposite to the fixing member 30. Exemplarily, the light-transmitting portion 72 is integrally formed with the main body 61 of the cover plate 60. The light-emitting portion 71 is mounted in the mounting cavity 121 and is located on a surface of the fixing member 30 facing the light-transmitting portion 72.

In the embodiment, the light-transmitting portion 72 is made of a thermoplastic plastic formed by a mixture of PC and ABS copolymer, or the light-transmitting portion is made of PMMA, or the light-transmitting portion is made of a mixture of PMMA and acrylonitrile. The light-transmitting portion 72 has a light incident surface 721 and a light-exiting surface 722. The light-exiting surface 722 and the light incident surface 721 are disposed opposite to each other. The light incident surface 721 is a surface of the light-transmitting portion 72 facing the inner side of the vehicle window assembly 120b and is disposed opposite to a light-emitting surface of the light-emitting portion 71. The light-exiting surface 722 is a surface of the light-transmitting portion 72 facing the outer side of the vehicle window assembly 120b. That is, the light-exiting surface 722 is the prompting surface 73.

Furthermore, the vehicle window assembly 120b has a first state and a second state. Specifically, when the vehicle window assembly 120b is in the first state, the light-emitting portion 71 is in a power-off state. At this point, the light-emitting portion 71 does not emit light, and the light-transmitting portion 72 is in an opaque state. It may be noted that, when the light-transmitting portion 72 is in the opaque state, the apparent color of the light-transmitting portion 72 is the inherent color of the material used to make the light-transmitting portion 72. Exemplarily, the color of the light-transmitting portion 72 is milky white.

When the vehicle window assembly 120b is in the second state, the light-emitting portion of the prompting member 70 is in a power-on state. At this point, the light-emitting portion 71 emits light. Light emitted from the light-emitting portion 71 enters the light-transmitting portion 72 through the light incident surface 721 of the light-transmitting portion 72 and exits through the light-exiting surface of the light-transmitting portion 72. With this configuration, when the vehicle 100 is parked and the driver or the passenger needs to open the vehicle door 120, the light-emitting portion 71 of the prompting member 70 is electrified and emits light, and the light from the light-emitting portion 71 emits to the outer side of the vehicle window assembly 120b through the light-transmitting portion 72. At this point, other vehicles or pedestrians at the rear of the vehicle 100 may notice the warning light emitted by the prompting member 70 and actively steer clear of the vehicle 100, thereby avoiding collisions with the vehicle door and thus avoiding safety accidents, ensuring personnel safety while reducing damage to the vehicle 100. Moreover, when the prompting member 70 emits light, the vehicle 100 will visually become more futuristic and dynamic, thereby helping to improve the aesthetic appeal of the vehicle 100 and improve the product grade of the vehicle 100.

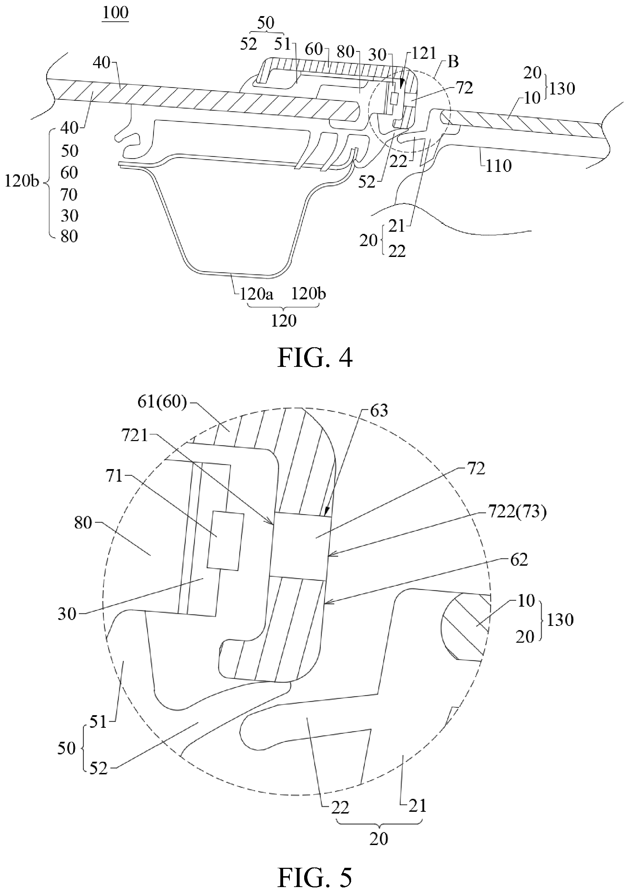

Reference is made to FIG. 4 and FIG. 5 together. FIG. 4 is a schematic view of a partial structure of the vehicle 100 as illustrated in FIG. 1 according to a second embodiment, taken along line A-A. FIG. 5 is an enlarged schematic view of section B in FIG. 4.

The vehicle 100 illustrated in this embodiment is different from the vehicle 100 illustrated in the first embodiment above in that the vehicle door 120 further includes an insert 80. The insert 80 covers an edge of the vehicle window glass 40 facing the prompting window 63 of the cover plate 60. In the embodiment, the vehicle window encapsulation 50 further covers a peripheral surface of the insert 80. Exemplarily, the insert 80, the vehicle window glass 40, and the vehicle window encapsulation 50 may be integrally formed through an injection molding process, and the insert 80 may be formed during the injection molding process. The insert 80 is used to fix and support the prompting member 70.

Furthermore, the insert 80 may be made of a mixture of polyamide 66 (PA66) and glass fiber (GF) with a mass fraction of 30%, or may be made of a mixture of polypropylene (PP) and GF with a mass fraction of 30%. It may be noted that, in actual production processes, when the insert 80 is made of a mixture of PA66 and GF with a mass fraction of 30%, PVC is typically selected to produce the vehicle window encapsulation 50. When the insert 80 is made of a mixture of PP and GF with a mass fraction of 30%, TPE is typically selected to produce the vehicle window encapsulation 50.

In the embodiment, the fixing member 30 is located in the mounting cavity 121 and mounted to the insert 80, and the fixing member 30 is disposed opposite to the light-transmitting portion 72 of the prompting member 70. The light-emitting portion 71 of the prompting member 70 is mounted on a surface of the fixing member 30 facing the light-transmitting portion 72. Exemplarily, the prompting member 70 may be fixed to the insert 80 by means of adhesive tape bonding. In other embodiments, the prompting member 70 may be fixed to the insert 80 by means of snap-fitting or screw fastening.

In the embodiment, when the vehicle window assembly 120b is in the first state, the light-emitting portion 71 is in a power-off state. At this point, the light-emitting portion 71 does not emit light, and the light-transmitting portion 72 is in an opaque state. When the vehicle window assembly 120b is in the second state, the light-emitting portion of the prompting member 70 is in a power-on state. At this point, the light-emitting portion 71 emits light. Light from the light-emitting portion 71 enters the light-transmitting portion 72 through the light incident surface 721 and exits through the light-exiting surface 722 of the light-transmitting portion 72.

With this configuration, when the vehicle 100 is parked and the driver or passenger needs to open the vehicle door 120, the light-emitting portion 71 of the prompting member 70 is electrified and emits light, and the light from the light-emitting portion 71 emits to the outer side of the vehicle window assembly 120b through the light-transmitting portion 72. At this point, other vehicles or pedestrians at the rear of the vehicle 100 may notice the warning light emitted by the prompting member 70 and actively steer clear of the vehicle 100, thereby avoiding collisions with the vehicle door and thus avoiding safety accidents, ensuring personnel safety while reducing damage to the vehicle 100. Moreover, when the prompting member 70 emits light, the vehicle 100 will visually become more futuristic and dynamic, thereby helping to improve the aesthetic appeal of the vehicle 100 and improve the product grade of the vehicle 100.

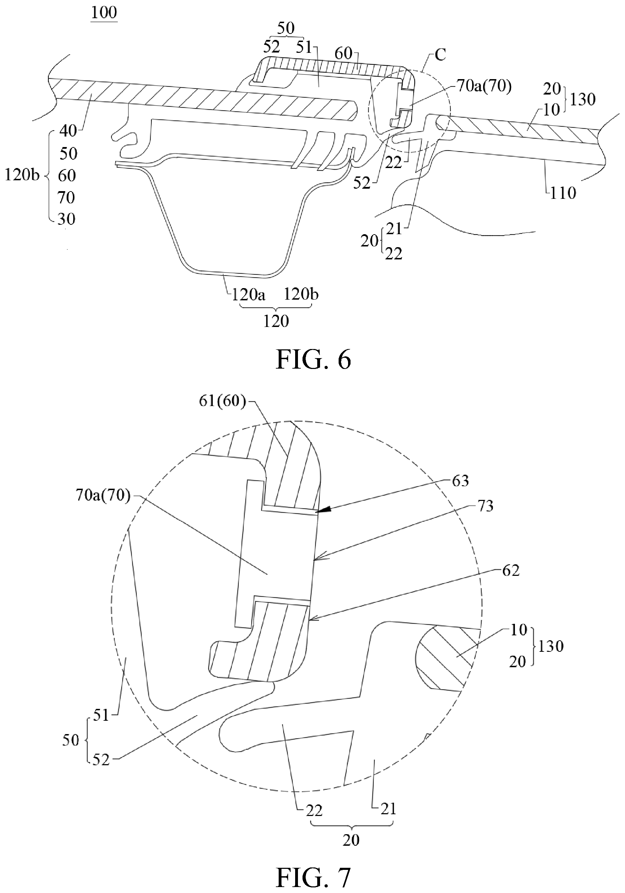

Reference is made to FIG. 6 and FIG. 7 together. FIG. 6 is a schematic view of a partial structure of the vehicle 100 as illustrated in FIG. 1 according to a third embodiment, taken along line A-A. FIG. 7 is an enlarged schematic view of section C in FIG. 6.

The vehicle 100 illustrated in this embodiment is different from the vehicle 100 illustrated in the first embodiment above in that the prompting member 70 is implemented as a camera 70a. The camera 70a is mounted to the prompting window 63. An imaging surface of the camera 70a serves as the prompting surface 73. The camera 70a is configured to capture and identify environmental information outside the vehicle 100, serving functions such as vehicle recognition and pedestrian recognition. When the vehicle door 120 is closed relative to the vehicle body 110, at least a portion of the prompting surface 73 is exposed relative to the counter piece 130.

In the embodiment, the vehicle 100 may further include an electronic display screen (not shown in the drawings). The electronic display screen is electrically connected to the camera 70a. The electronic display screen may be configured to display images captured by the camera 70a, enabling the driver and passengers in the vehicle 100 to obtain environmental information at the rear of the vehicle 100.

With this configuration, the camera 70a and the electronic display screen are used cooperatively, so that the electronic display screen serves the function of a rearview mirror, allowing rear-seat passengers in the vehicle 100 to obtain the immediate situation of pedestrians and other vehicles at the rear before opening the vehicle door 120, thereby avoiding safety accidents caused by suddenly opening the vehicle door 120 and ensuring personnel safety.

In the technical solution of the disclosure, the prompting member 70 is provided in the vehicle window assembly 120b, and light emitted by the prompting member 70 is made to exit the vehicle window assembly 120b through the prompting surface 73. Therefore, pedestrians and other vehicles at the rear of the vehicle 100 may be warned, thereby enabling pedestrians and other vehicles at the rear of the vehicle 100 to judge the opening and closing status of the vehicle door 120 in advance, so that they can steer clear of the vehicle 100, thus avoiding safety accidents caused by suddenly opening the vehicle door 120. In this way, personnel safety is ensured, and damage to the vehicle is reduced.

On this basis, the prompting member 70 is implemented as the camera 70a, and the camera 70a and the electronic display screen are used cooperatively, allowing rear-seat passengers in the vehicle 100 to obtain the immediate situation of pedestrians and other vehicles at the rear before opening the vehicle door 120, thereby avoiding safety accidents caused by suddenly opening the vehicle door 120 and ensuring personnel safety.

The embodiments of the disclosure are described in detail above. The principle and implementation of the disclosure are described in this specification by using specific examples. The descriptions about the embodiments are merely provided to help understand the methods and core ideas of the disclosure. In addition, a person of ordinary skill in the art can make variations to this application in terms of the specific implementations and application scopes according to the ideas of the disclosure. Therefore, the content of this specification shall not be construed as a limitation to the disclosure.

## Claims

1. A vehicle window assembly for a vehicle, wherein the vehicle comprises a vehicle body, a counter piece, and a vehicle door, wherein both the counter piece and the vehicle door are mounted to the vehicle body, the vehicle door is operable to be opened or closed relative to the vehicle body, and the vehicle door comprises a vehicle door body and the vehicle window assembly mounted to the vehicle door body, wherein the vehicle window assembly comprises a vehicle window glass, a vehicle window encapsulation, a cover plate, and a prompting member, wherein the vehicle window encapsulation covers a peripheral side of the vehicle window glass, the cover plate is mounted to the vehicle window encapsulation, the cover plate is provided with a prompting window penetrating through the cover plate in a thickness direction of cover plate, the prompting member is mounted to the prompting window, and the prompting member has a prompting surface exposed relative to the cover plate and facing an outer side of the vehicle window assembly.

2. The vehicle window assembly according to claim 1, wherein the vehicle window encapsulation comprises a first encapsulation body and a first lip, wherein the first lip is fixedly connected to the first encapsulation body and abuts against a bottom end surface of the cover plate;
the counter piece comprises a quarter window glass and a quarter window encapsulation, wherein the quarter window encapsulation covers a peripheral side of the quarter window glass, and comprises a second encapsulation body and a second lip fixedly connected to the second encapsulation body; and
when the vehicle door is closed relative to the vehicle body, the second lip is located on a side of the first lip facing away from the cover plate and abuts against the first lip.

3. The vehicle window assembly according to claim 1 or 2, wherein the cover plate has a side surface facing the counter piece, and the prompting surface is exposed relative to the side surface; and
when the vehicle door is closed relative to the vehicle body, at least a portion of the prompting surface is exposed relative to the counter piece.

4. The vehicle window assembly according to claim 1, wherein the cover plate and the vehicle window encapsulation cooperatively define a mounting cavity, wherein the mounting cavity is in communication with the prompting window; and
the prompting member comprises a light-emitting portion and a light-transmitting portion, wherein the light-emitting portion is mounted in the mounting cavity, the light-transmitting portion is mounted to the prompting window, and the light-transmitting portion has a light incident surface and a light-exiting surface, wherein the light incident surface is disposed opposite to a light-emitting surface of the light-emitting portion, and the light-exiting surface is the prompting surface.

5. The vehicle window assembly according to claim 4, wherein the vehicle window assembly further comprises a fixing member located in the mounting cavity and mounted to the cover plate, wherein the fixing member is disposed opposite to the light-transmitting portion, and the light-emitting portion is mounted on a surface of the fixing member facing the light-transmitting portion.

6. The vehicle window assembly according to claim 4, wherein the vehicle window assembly further comprises an insert and a fixing member, wherein the insert covers an edge of the vehicle window glass facing the prompting window, the vehicle window encapsulation further covers a peripheral surface of the insert, the fixing member is located in the mounting cavity and mounted to the insert, the fixing member is disposed opposite to the light-transmitting portion, and the light-emitting portion is mounted on a surface of the fixing member facing the light-transmitting portion.

7. The vehicle window assembly according to any one of claims 4 to 6, wherein when the light-emitting portion is electrified and emits light, light from the light-emitting portion enters the light-transmitting portion through the light incident surface and exits through the light-exiting surface.

8. The vehicle window assembly according to claim 7, wherein the light-transmitting portion is made of a thermoplastic plastic formed by a mixture of polycarbonate (PC) and acrylonitrile-butadiene-styrene (ABS) copolymer, or the light-transmitting portion is made of polymethyl methacrylate (PMMA), or the light-transmitting portion is made of a mixture of PMMA and acrylonitrile.

9. The vehicle window assembly according to claim 4, wherein the cover plate comprises a main body and a coating, wherein the main body is mounted to the vehicle window encapsulation, the coating is provided on an outer surface of the main body, the prompting window penetrates through both the main body and the coating, and the light-transmitting portion is integrally formed with the main body.

10. The vehicle window assembly according to claim 1, wherein the prompting member is implemented as a camera, wherein the camera is mounted to the prompting window, and an imaging surface of the camera serves as the prompting surface.

11. The vehicle window assembly according to claim 8, wherein the cover plate is made of a thermoplastic plastic formed by a mixture of PC and ABS copolymer, or the cover plate is made of PMMA, or the cover plate is made of a mixture of PMMA and acrylonitrile.

12. A vehicle door, comprising a vehicle door body and the vehicle window assembly according to any one of claims 1 to 11, wherein the vehicle window assembly is mounted to the vehicle door body.

13. A vehicle, comprising a vehicle body, a counter piece, and the vehicle door according to claim 12, wherein the counter piece and the vehicle door are both mounted to the vehicle body, and the vehicle door is operable to be opened or closed relative to the vehicle body.
